# EUROPÄISCHE PATENTSCHRIFT

(11) **EP 0 355 033 B1**
(45) Veröffentlichungstag und Bekanntmachung des Hinweises auf die Patenterteilung: **20.10.1993**
(21) Anmeldenummer: 89115274.6
(22) Anmeldetag: 18.08.1989
(51) Int. Cl.: B23H 7/26

(54) **Vorrichtung zur Befestigung eines an einem Ende eines zylindrischen Schaftes angeordneten Gegenstandes an einem Kupplungsteil einer Kupplung**
Device to attach an object mounted at the end of a cylindrical shank to the coupling part of a coupling device
Dispositif pour la fixation d'un objet monté en bout d'un axe cylindrique à la pièce de couplage d'un accouplement

(30) Priorität: 19.08.1988 DE 3828239
(43) Veröffentlichungstag der Anmeldung: 21.02.1990
(73) Patentinhaber: Büchler B-SET AG, CH-9230 Flawil (CH)
(72) Erfinder: Büchler, René, CH-9345 Oberbüren (CH)
(74) Vertreter: von Bülow, Tam, Dr.

(56) Entgegenhaltungen:
- DE-A- 3 335 022
- GB-A-11 59
- WECK : "Werkzeugmaschinen", Band 1, VDI-Verlag, 1980, Seiten 304, 305.

## Beschreibung

Die Erfindung betrifft eine Vorrichtung zur Befestigung eines an einem Ende eines einen zylindrischen Schaft aufweisenden Zwischenstückes angeordneten Gegenstandes an einem Kupplungsteil einer Kupplung, deren anderes Kupplungsteil an einer Werkzeugmaschine, insbesondere einer Senkerosionsmaschine, verankert ist gemäß dem Oberbegriff des Anspruchs 1.

Eine Vorrichtung der eingangs genannten Art ist aus der DE-PS 26 46 951 zur Befestigung von Werkzeugen an Funkenerosionsmaschinen bekannt, bei der ein in einem Spannfutter zu verspannender Schaft einen radial vorstehenden Stift aufweist, der mittels eines federbelasteten Spanngliedes gegen die Stirnfläche der Aufnahme des Schaftes und gegen einen parallel zum Schaft von der Aufnahme abstehenden Bolzen andrückbar ist.

Dabei ergibt die Anlage des Stiftes an der Stirnfläche die Höhenfixierung und die Anlage des Stiftes gegen den Bolzen die Winkelfixierung. Diese Befestigungseinrichtung hat jedoch den Nachteil, daß der Stift zur Auflage und Höhenfixierung auf den Schaft aufgezogen, d.h. aufgeschrumpft und/oder mittels einer Madenschraube gesichert werden, d.h. als zusätzliches Teil am Schaft angebracht werden muß. Weiterhin ist dort die Elektrode an dem Schaft angelötet, was arbeitsaufwendig ist und bei Erwärmung auch zu einem Lösen der Elektrode vom Schaft führt.

In dem Dokument GB-A-1159 A.D.1915 ist eine Vorrichtung zur Befestigung von Spindeln mit unterschiedlichen konischen Befestigungsabschnitten in demselben Spannfutter beschrieben, welches eine vorgegebene konische Bohrung aufweist. Um dieses zu erreichen, wird zur Befestignung eines Dornes bzw. einer Drehbankspindel eine einstückige Hülse verwendet. Diese Hülse weist sowohl eine äußere konische Mantelfläche als auch eine innere konische Wandungsfläche auf. Geometrisch gesehen handelt es sich um einen hohlen Kegelstumpf.

Mit einer solchen Hülse ist es möglich, den konischen Endabschnitt einer Spindel in einer konischen Bohrung zu befestigen, deren kleinster Durchmesser größer als der größte Durchmesser des konischen Abschnittes der Spindel ist. Anders ausgedrückt bedeute dies, daß die Hülse als ein "Zwischenfutter" dient, um unterschiedliche Durchmesser an einander anzupassen.

In dem Dokument EP-A-0287777 (Art. 54(3) EPÜ) der Anmelderin ist eine Vorrichtung zur Verbindung eines eine Senkelektrode tragenden Schaftes mit einem Kupplungsteil beschrieben, bei dem das Kupplungsteil an einer Werkzeugmaschine, insbesondere einer Senkerosionsmaschine verankert ist, und dieses Teil eine konische, sich in Richtung von ihrer Öffnung zu seiner Kupplungsfläche hin verengende Ausnehmung aufweist.

Innerhalb dieser Ausnehmung ist eine geteilte Einsatzbuchse vorgesehen, deren innere Fläche an die Außenkontur des Schaftes angepaßt ist und so das Kupplungsteil mit dem Schaft verpresst.

Der Erfindung liegt die Aufgabe zugrunde, bei einer gattungsbildenden Vorrichtung eine einfache Handhabung des mit Hilfe des Spannfutters und des Schaftes zu befestigenden Gegenstandes zu gewährleisten, wobei eine hohe Repetiergenauigkeit ohne Einfluß manueller Andruckkräfte erzielt werden soll und Herstellung der Vorrichtung einfacher und kostengünstiger sein soll.

Diese Aufgabe wird bei einer gattungsgemäßen Vorrichtung durch die im Patentanspruch 1 angegebenen Merkmale gelöst.Vorteilhafte Ausgestaltungen und Weiterbildungen der Erfindung sind den Unteransprüchen zu entnehmen.

Mit der erfindungsgemäßen Lösung können Senkelektroden, die auf Normschäften befestigt sind, teilweise im Austausch eingesetzt werden. Dabei ist es möglich, auf einfachste Weise und ohne großen Zeitaufwand die Elektroden auszuwechseln. Insbesondere ist es von Vorteil, daß das aufwendige Festlöten der Elektrode an dem Schaftende entfällt.

Da das Befestigungsteil als integraler Bestandteil des Zwischenstücks an dessen Schaft angeformt ist, können zusätzliche Teile, die durch eine Montage meist vor Ort weitere Ungenauigkeiten bei der Justierung und Befestigung des Schaftes entstehen lassen, vermieden werden.

Des weiteren ermöglicht die Ausbildung des Befestigungsteils als integraler Bestandteil des Zwischenstücks eine Kostenreduzierung beim Herstellen der Schaftteile, da die erforderlichen Schäfte im Druckgußverfahren hergestellt werden und daher für das den Schaft umfassende erfindungsgemäße Zwischenstück nur eine einzige Druckgußform Verwendung finden muß.

Durch die einstückige Ausbildung der Buchse können die Werkzeuge rasch und fest am hohlzylindrischen Ende des Schaftes angebracht und ebenso leicht ausgewechselt werden. Die Wandungsmantelfläche der einstückigen Buchse weist eine konische Kontur auf und die Flächen der Innenwandung bilden einen zylindrischen Innenraum aus, in den das einzuspannende Ende eines zylinderförmigen Befestigungsteils des jeweiligen Werkzeugs einsetzbar und damit zusammen mit der einstückigen Buchse in das hohlzylindrische oder konische innere Ende des Schaftes einpreßbar ist. Diese mögliche Verklemmung des Werkzeugs mit Hilfe der Buchse in dem hohlzylindrischen oder konischen Schaftende ermöglicht eine schnelle Zentrierung des Werkzeuges für den Arbeitsvorgang. Durch diese Art der Befestigung des Werkzeuges am Schaft ist es nicht mehr notwendig, in aufwendiger Weise das Werkzeug, das beispielhaft im vorliegenden Falle eine Elektrode ist, auf der Stirnfläche des Schaftes anzulöten. Durch die selbsthemmende Verklemmung mit Hilfe der Buchse ist beim Befestigen der Elektrode am Schaft keine derart präzise Handhabung durch das Arbeitspersonal gefordert, wie das noch beim Anlöten der Elektrode am Schaft der Fall war.

Mit der Verriegelung erhält man eine präzise, reproduzierbare Anpresskraft zwischen Aufnahmehülse und Zwischenstück, die vollständig unabhängig von manuellen Anpresskräften beim Einführen des Zwischenstückes in die Aufnahmehülse ist. Dadurch wird auch die Repetiergenauigkeit verbessert bzw. sichergestellt.

In einem bevorzugten Ausführungsbeispiel hat das Befestigungsteil des Zwischenstücks eine einseitig gekrümmte Kurvenform, in einem anderen Ausführungsbeispiel weist es einen eckigen Querschnitt auf. Die an der Stirnfläche der Wandung der Aufnahmehülse des zweiten Kupplungsteils ausgebildete Nut ist in einem bevorzugten Ausführungsbeispiel keilförmig, kann aber bei schrägen Seitenwänden auch einen zusätzlichen horizontalen Bodenabschnitt aufweisen. Auf diese Weise kann das Befestigungsteil an den Flächen der Nut linienberührend oder mit schmaler Flächenberührung anliegen, wodurch die jeweils gewünschte Höhenfixierung erzielt wird. Ohne das Zwischenstück vertikal zu bewegen, ist es dann in der Anlageposition des Befestigungsteils in der Nut nicht mehr möglich, das Zwischenstück innerhalb der zylindrischen Bohrung des jeweiligen Kupplungsteils zu drehen.

In einer bevorzugten Ausführungsform der Erfindung ist die Verriegelung dreh- bzw. schwenkbar, wobei der jeweilige Befestigungsabschnitt erst nach Aufnahme in der Nut mit der Verriegelung in Eingriff bringbar ist. Durch eine derartige Ausbildung der Verriegelung kann das Befestigungsteil, in der Nut linienberührend anliegend, schnell und fest verriegelt werden; hierdurch wird die nötige Winkelfixierung erreicht.

Die feste Lage des Befestigungsteils in der Nut einerseits sowie gleichzeitig die eingreifende entsprechende Verriegelung bewirkt, daß das Befestigungsteil wie auch der Schaft, über jeweils unterschiedlich orientierte Referenzflächen an den Wandungen des Kupplungsteils anliegen. Durch diese sowohl vertikale als auch horizontale Anlage entsprechender Flächen bzw. Berührungslinien wird auf schnelle und einfache Weise bei der Befestigung des Zwischenstücks eine starre und feste Position des Schaftes im Aufnahmeteil erzielt. Ungewünschte Kippbewegungen des Schaftes werden durch diese Positionierung vermieden. Dabei wirken die Anlageflächen bzw. Flächen der Anlagelinien am Kupplungsteil als Referenzflächen für die Justierung.

Vorteilhafte Ausgestaltungen der erfindungsgemäßen Lehre zeigen eine als Haken ausgebildete Verriegelung, deren Stabilität durch ein Widerlager, das mit dem Haken in Eingriff bringbar ist, deutlich verbessert wird.

In einer anderen Ausführungsform der erfindungsgemäßen Lehre weist die einstückige Buchse eine zentrale Kreisöffnung in ihrem Bodenteil auf, deren Durchmesser kleiner als der Durchmesser des durch die Innenfläche der Wandungen begrenzten kleinsten Zylinders ist, dessen Achse koaxial mit der Achse der einstückigen Buchse fluchtet. Hierdurch ist es möglich, über eine Gewindebohrung in dem Kupplungsteils ein Hilfswerkzeug einzuschrauben, mit dem das in das eine Ende des zylindrischen Schaftes eingepreßte Werkzeug oder Werkstück, das beispielsweise eine Senkelektrode ist, herausgestemmt werden kann. ( Im folgenden soll der Begriff Senkelektrode exemplarisch für Werkstück oder Werkzeug verwendet werden.) So können die Senkelektroden jederzeit schnell ausgewechselt werden; die Gefahr einer Verklemmung durch die eingepreßte Senkelektrode und die damit zusammenhängende Störung des gesamten Arbeitsprozesses kann auf diese Weise vermindert werden.

Eine weitere erfindungsgemäße Ausführungsform weist einen von der einstückigen Buchse begrenzten Innenraum mit von der zylindrischen Form abweichender Gestalt auf, um vorteilhaft Werkzeugbefestigungsabschnitte mit unterschiedlicher Kontur aufnehmen zu können.

Bei einer anderen erfindungsgemäßen Ausführungsform weist die Wandungsmantelfläche der einstückigen Buchse radial vorspringende Rippen auf; bei einer weiteren vorteilhaften Ausführunsform sind derartige Rippen an den Innenflächen der Wandung der einstückigen Buchse angeordnet. In beiden Fällen kann über die Rippen der Einpreßdruck erhöht werden, den die Innenflächen des Schaftes beim Einpreßvorgang auf den Schaft des Werkzeuges über die einstückige Buchse ausüben. Hat der Schaft des Werkzeuges von der hohlzylindrischen Form abweichende Kontur, so kann mit Hilfe der Rippen sichergestellt werden, daß durch die vom Schaft des Werkzeugs auf die Innenflächen der Wandungen ausgeübten Kräfte, die nicht unbedingt an allen Stellen gleich sind, dennoch Berührungsflächen zwischen der einstückigen Buchse und den Innenflächen des Schaftes über die Rippen bilden, um das Werkzeug nach dem Einpreßvorgang im Schaft über die einstückige Buchse festzuhalten.

In einer weiteren erfindungsgemäßen Ausführungsform ist die einstückige Buchse aus elastisch verformbarem Material. Durch ein Anschmiegen der einstückigen Buchse aufgrund ihrer Elastizität können insbesondere genormte Schäfte von Werkzeugen mit kleinen Durchmessern Verwendung finden, da die Aussparungen im Innenraum der einstückigen Buchse bei kleineren Innenräumen gußtechnisch leichter zu verwirklichen sind.

Bei einer anderen erfindungsgemäßen Ausführungsform wird die einstückige Buchse vorteilhaft aus Aluminium im Druckgußverfahren hergestellt. Da Aluminium sehr kostengünstig ist, kann in diesem Fall die einstückige Buchse als Wegwerfartikel verwendet werden. Die sonst üblichen Repetiergenauigkeiten, die bei Wiederverwendung von Buchsen nötig sind, können beim einmaligen Gebrauch außer Acht gelassen werden. Da insbesondere Rohlinge und nicht Fertigteile gespannt werden, sind die Anforderungen an die Verarbeitung der Aluminiumteile als Einspannvorrichtungen geringer.

Weitere vorteilhafte Formen der einstückigen Buchse sehen vor, daß diese nur abschnittweise konisch ist, so daß sie nicht mit ihrer vollen Mantelfläche in der Bohrung der Aufnahmehülse anliegen. Hierdurch erhält man höhere Flächenpressungen und damit höhere verformende Kräfte für eine plastische und/oder elastische Verformung der Buchse. Bei einer Variante besteht die Buchse aus mehreren konischen Segmenten, die durch federelastische Teile miteinander verbunden sind. Nur die konischen Segmente liegen an der Bohrung der Aufnahmehülse an. Bei einer anderen Variante hat die Buchse an ihrer Außenkontur parallel zur Mittelachse verlaufende Nuten oder bis zur inneren Bohrung der Öffnung durch das "Fleisch" der Buchse durchgehende Schlitze, die dann allerdings nicht durch die ganze Länge der Buchse verlaufen, so daß an einem Ende noch ein geschlossener Ring stehen bleibt. Auch kann die Buchse eine von der Kreiskontur abweichende Querschnittsform haben, beispielsweise die Form eines Vieleckes bzw. eines Polygonzuges, wobei im Längsschnitt die erwähnte Konizität erhalten bleibt.

Bei einer weiteren Ausgestaltung der Erfindung sind die Zentrierfunktion für die Z-Achse und für die Zentrierfunktion in der X/Y-Achse voneinander getrennt. Hierzu ist die Stirnfläche der Aufnahmehülse als Anschlag in Z-Richtung ausgebildet, während die Nut in der Stirnfläche nur für die Zentrierung in X/Y-Richtung bzw. Drehrichtung sorgt. Damit keine statische Überbestimmung und damit Ungenauigkeit auftritt, ist das vom Zwischenstück abstehende Befestigungsteil federelastisch ausgebildet und die Seitenwände der Nut, die ja vorzugsweise keilförmig verlaufen, sind gegenüber der Stirnfläche der Aufnahmehülse versetzt, so daß beim Einführen des Zwischenstückes zunächst der radial äußere Teil des Befestigungsteiles mit den Seitenwänden der Nut in Kontakt kommt. Beim weiteren Einführen, das durch die Kraft der Verriegelung bewirkt wird, wird das Zwischenstück unter elastischer Verformung des Befestigungsteiles solange weiter vorgeschoben, bis der radial innere Abschnitt des Befestigungsteiles gegen die genannte Anschlagfläche stößt. Durch die Trennung der Zentrierfunktion für die genannten Achsen erhält man eine höhere Spanngenauigkeit.

Die Erfindung wird beispielsweise anhand einer bevorzugten Ausführungsform gemäß der Zeichnungen näher erläutert.

Es zeigen:
- Fig. 1: einen Axialschnitt durch eine Vorrichtung gemäß der Erfindung.
- Fig. 2: eine Ansicht des Schaftes mit dem einseitig gekrümmte Kurvenform aufweisenden Befestigungsteil.
- Fig. 3: einen Endabschnitt des Kupplungsteils mit Nut.
- Fig. 4: eine Seitenansicht einer hakenförmigen Verriegelung.
- Fig. 5: eine Draufsicht auf das Widerlager für die Verriegelung.
- Fig. 6: einen Schnitt durch die einstückige Buchse bei Einpressen eines zylindrischen Schaftes; und
- Fig. 7: einen Schnitt durch die einstückige Buchse bei Einpressen eines quadratischen Schaftes.

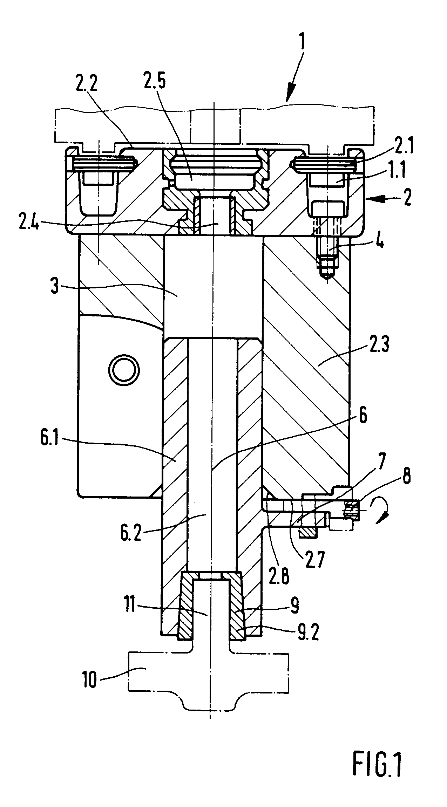

Fig. 1 zeigt ein strichpunktartig angedeutetes erstes Kupplungsteils 1, welches an einer nicht gezeigten Senkerodiermaschine, die hier exemplarisch für beliebige Werkzeugmaschinen behandelt wird, fest verankert ist. Dieses weist beschränkt elastisch verformbare Übertragungselemente 1.1 auf, in die jeweils ein an dem mit ausgezogenen Linien in unterer Position gezeichnetes zweites Kupplungsteils 2 vorgesehenes, starres Profilstück in der Gestalt eines Zylinderbolzens 2.1 eingreift. Dabei wird eine Relativbewegung der beiden Kupplungsteile 1, 2 in den Hauptrichtungen x, y, z des Raumes verhindert.

An der seiner Kupplungsfläche 2.2 abgewandten Seite des im entkoppelten Zustand frei handhabbaren, unteren zweiten Kupplungsteiles 2 ist eine Aufnahmehülse 2.3 mittels mehrerer Schrauben 4 befestigt, wobei die Aufnahmehülse 2.3 eine zur gesamten Kupplung koaxiale Bohrung 3 aufweist. Durch diese Bohrung 3 werden die zylindrischen Wandungen der Aufnahmehülse 2.3 gebildet, die koaxial zum Kupplungsteil 2 und an diesem direkt befestigt sind. In dem der Kupplungsfläche 2.2 zugewandten Boden des Kupplungsteils 2 und koaxial zur Bohrung 3 befindet sich eine Gewindebohrung 2.4. Im Anspruch an letztere ist eine größere Zylinderbohrung 2.5 in der Fig. 1 sichtbar. Während die größere Zylinderbohrung 2.5 zur Aufnahme einer das Verspannen der beiden Kupplungsteiles 1, 2 gegeneinander bewirkenden, an sich bekannten Vorrichtung dient, ist die Gewindebohrung 2.4 für ein Hilfswerkzeug vorgesehen, das in der Figur nicht weiter dargestellt ist, aber dazu dient, einen später noch zu erläuterndes Zwischenstück bzw. den Schaft eines Werkzeugs aus seiner Einpreßlage zu stemmen.

In die zylindrische Bohrung 3 wird ein hohlzylindrischer Schaft 6.1 eines Zwischenstücks 6 koaxial zum Kupplungsteil 2 eingeführt. An der zylindrischen Außenfläche des Schaftes 6.1 des Zwischenstücks ist ein sich radial und im wesentlichen senkrecht zur Außenfläche des Schaftes 6.1 nach außen erstreckender Befestigungsteil 7 integral mit dem Zwischenstück 6 an dem Schaft 6.1, angeformt.

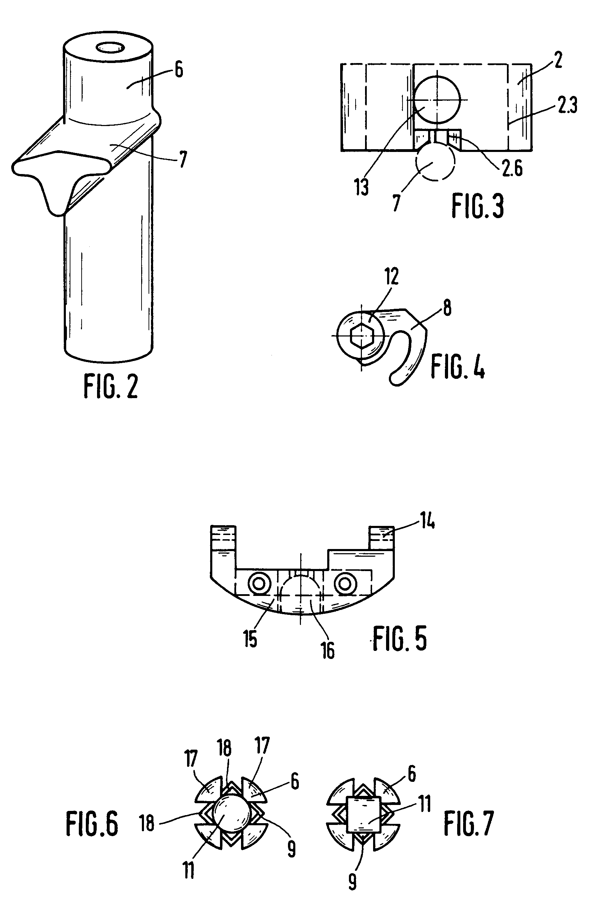

Die vertikale Einführbewegung des zylindrischen Schaftes 6.1 in der Bohrung 3 wird durch die Anlage des Befestigungsteils 7 an der als Anschlag in Z-Richtung dienenden Stirnfläche 2.7 der zylindrischen Wandung der Aufnahmehülse 2.3 des Kupplungsteile 2 begrenzt. Im Bereich der Öffnung der Bohrung 3 ist noch eine Fase 2.8 vorgesehen, durch die verhindert wird, daß das Befestigungsteil mit seinem radial innersten Abschnitt, der aus fertigungstechnischen Gründen sowie aus Gründen der Stabilität etwas abgerundet ist, an der Stirnfläche 2.7 zum Anschlag kommt. Um dabei die richtige Positionierung der Verriegelung mit Hilfe des Befestigungsteils 7 so schnell wie möglich aufzufinden, wie auch die Drehbewegung des Befestigungsteils 7 zu begrenzen, ist in der obengenannten Stirnfläche der zylindrischen Wandung des Aufnahmeteils 2.3 des Kupplungsteils 2 eine in der Fig. 3 näher dargestellte Nut 2.6 ausgebildet. Diese Nut 2.6 hat im wesentlichen Keilform, um das jeweilige Befestigungsteil linienberührend aufzunehmen. Bei speziell konturierten Befestigungsteilen umfaßt die Nut auch einen horizontalen Bodenabschnitt.

Die Nut ist dabei gegenüber der Stirnfläche 2.7 so versetzt angeordnet, daß das Befestigungsteil 7 beim Einführen in Z-Richtung zunächst mit den Seitenwänden der Nut in Kontakt kommt. Erst bei weiterem Einschieben des Zwischenstückes kommt dann der radial innere Abschnitt des Befestigungsteiles 7 mit dem Anschlag 2.7 in Berührung, wobei das Befestigungsteil 7 dabei elastisch verformt wird. Dieser Versatz ist natürlich sehr gering, so daß auch die elastische Verformung gering ist. Er bewegt sich in der Größenordnung von einigen µ.

Zur weiteren Sicherung sowie Hemmung der Bewegung des Befestigungsteils 7 sowie des damit verbundenen zylindrischen Schaftes 6 ist eine Verriegelung 8 vorgesehen, die gemäß Fig. 1 als drehbarer Haken ausgebildet ist. Dieser drehbare Haken, sowie dessen bewegliche Befestigung an der zylindrischen Wandung der Aufnahmehülse 2.3 des Kupplungsteils 2 wird im weiteren noch anhand der Figuren 3 und 4 erläutert.

In das vom Kupplungsteils 2 entfernt liegende Ende des Schaftes 6.1 des Zwischenstücks 6, das mit einer zylindrischen Bohrung 6.2 versehen ist, wird eine einstückige Buchse 9, in deren durch die Wandung 9.2 gebildeten Innenraum ein Schaft 11 eines Rohlings (Gegenstandes), wie beispielsweise eines Werkzeuges 10 fest aufgenommen wird, eingeführt. Das Werkzeug 10 ist dabei eine Senkelektrode, deren Schaft 11 zur üblichen Halterung dient. Die einstückige Buchse 9 umschließt vollständig den vom Werkzeug 11 abgewandten Teil des Schaftes 11, der vorteilhafterweise an der horizontalen Bodenfläche der einstückigen Buchse 9, anliegt. Der Schaft 11 kann später über die zentrale Öffnung 9.1 und ein schon erläutertes Hilfswerkzeug wieder aus der einstückigen Buchse 9 entfernt werden.

Die Wandungsmantelfläche der einstückigen Buchse 9 weist im wesentlichen konische Kontur auf, wohingegen die Innenflächen der Wandung 9.2 der einstückigen Buchse 9 einen hohlzylindrischen Innenraum zur Aufnahme des entsprechenden zylindrischen Befestigungsabschnittes 11 aufweisen. In Abhängigkeit von der Form des Befestigungsabschnittes kann selbstverständlich der Innenraum der einstückigen Buchse auch eine von der zylindrischen Form abweichende Gestalt haben. Es kommt nur darauf an, daß die Innenwandfläche der einstückigen Buchse 9 kraftschlüssig mit dem Schaft 11 des Werkzeuges 10 verbunden ist.

Durch die konische Kontur der Wandungsmantelfläche der einstückigen Buchse 9.1 wird beim Einpressen in das vom Kupplungsteil 2 entfernt liegende Ende des hohlzylindrischen Schaftes 6.1 der Befestigungsabschnitt in Abhängigkeit von der Einpreßtiefe immer stärker preßdruckbelastet. Die Wandungen 9.2 der einstückigen Buchse 9 wirken dabei aufgrund ihrer Konizität wie Keile.

Um speziell die konische Wirkung der konischen Mantelflächen der einstückigen Buchse 9 auszunutzen, ist das vom Kupplungsteil 2 entfernt liegende Ende des Zwischenstücks 6 im Inneren ebenfalls konisch ausgeformt. Indem es an die Buchse 9 formmäßig angepaßt ist, wird eine feste Halterung des Schaftes 10 gewährleistet.

An der Mantelfläche, wie auch auf der Innenfläche der einstückigen Buchse können zusätzlich noch nicht dargestellte Rippen vorgesehen sein. Durch die Rippen kann bei Abweichung der Form des Schaftes 11 des Werkzeugs 10 von der zylindrischen Form ein bestimmter, zusätzlicher Preßdruck von den Innenflächen des hohlzylindrischen Schaftes 6 auf den Schaft 11 über die einstückige Buchse 9 ausgeübt werden.

Statt der vorspringenden Rippen kann die Mantelfläche auch als Vieleck bzw. Polygonzug ausgebildet sein, wodurch ebenfalls der Preßdruck erhöht werden kann.

Die einstückige Buchse 9 ist aus elastisch und/oder plastisch verformbarem Material, da sie nur auf diese Weise bei schon aufgenommenem Schaft 11 in das hohle Ende des Zwischenstücks 6 gepreßt werden kann. Die Toleranz innerhalb dieser Elastizität ist vorzugsweise sehr gering, so daß nahezu keine Fehler bezüglich der Zentrierung des Schaftes auftritt.

Fig. 2 zeigt eine weitere Möglichkeit der Befestigung des Befestigungsabschnittes Befestigungsteil 7 an der zylindrischen Wandung der Aufnahmehülse 2.3 des Kupplungsteils 2. Dabei ist der Schaft 6.1 des Zwischenstücks, wie in der Fig. 1 dargestellt wird, in der Bohrung 3 aufgenommen. Das Befestigungsteils 7 weist eine einseitig gekrümmte Kurvenform auf, die im Querschnitt in Art eines T mit abgerundeten Spitzen überdacht wird und integral an dem zylindrischen Schaft 6.1 mittels Druckgießen zu einem gemeinsamen Zwischenstück 6, ausgebildet ist. Dieses Befestigungsteil 7 wird in einer Nut 2.6, nach dem in Fig. 3 später erläuterten Prinzip, in der Stirnfläche der zylindrischen Wandung der Aufnahmehülse 2.3 des Kupplungsteils 2 aufgenommen. Die unteren, einseitig gekrümmten Kurvenformen des Befestigungsteils 7 liegen dann linienberührend an den Referenzflächen der Nut 2.6 an; die horizontale Drehbewegung des Zwischenstücks 6 wird auf diese Weise begrenzt und damit praktisch verhindert. Kippbewegungen des zylindrischen Schaftes 6 in der Bohrung 3 sind aufgrund der gewählten Durchmesser ohnehin ausgeschloßen. Das Verhältnis Spanndurchmesser zu Einspanntiefe kann aufgrund dieses Formschlusses sehr vergrößert werden, ohne die Spanneigenschaften zu verschlechtern.

Fig. 3 zeigt den Endabschnitt der zylindrischen Wandung der Aufnahmehülse 2.3 des Kupplungsteile 2, in deren Stirnfläche die Nut 2.6 ausgebildet ist. Liegt das einseitig gekrümmte Befestigungsteil 7 in dieser Nut 2.6, so ist nur noch eine vertikale Bewegung aus der Nut 2.6 heraus möglich. Diese Bewegung wird im Beispie, gemäß Fig. 3 durch eine in Fig. 4 näher dargestellten Haken 8 verhindert. Dieser Haken 8 gemäß Fig. 4 weist einen gekrümmten Schlitz auf, dessen Schlitzseitenabstand eine Breite zur Aufnahme des Befestigungsteils 7 aufweist. Vertikal am Haken 8 befestigt ist ein federbelasteter Stift 12, der in eine Bohrung 13 des in Fig. 3 gezeigten Kupplungsabschnittes eingeführt wird. Liegt nun der Befestigungsteil 7 in der Nut 2.6 formschlüssig an, so wird seine Vertikalbewegung durch den Eingriff des Hakens 8 begrenzt bzw. verhindert.

Da die endgültige Fixierung durch die in Z-Richtung wirkende Anpreßkraft des Hakens 8 aufgebracht wird, ist die Positionier- und die Repetiergenauigkeit erhöht, da abweichend von bekannten Spannsystemen die endgültige Andruckkraft nicht von manuell aufgebrachten Kräften abhängt. Der Haken wird lediglich bis zu seinem Endanschlag gedreht, wodurch sich eindeutig reproduzierbare Kräfte einstellen.

Ein Ende des Stiftes 12 von Haken 8 weist einen zum Stift 12 konzentrischen Inbus auf, in den ein Werkzeug eingreifen kann, um die Position des Hakens 8 zu verändern. Der Haken 8 kann auf diese Weise in seine Schließ- oder Öffnungsstellung gebracht werden. Mit Hilfe des in Fig. 5 dargestellten Widerlagers 15 kann die Sperrwirkung des Hakens 8 verstärkt werden. Das Widerlager 15 hat C-förmige Kontur und ist mittels in den Enden durch Bohrungen 14 geführte Stifte an der Außenwand des Kupplungsteils 2 angeordnet. Ist der Haken 8 in seiner Schließstellung, so bildet seine obere Stirnfläche mit dem Vorsprung 16 des Widerlagers 15 eine fluchtende Begrenzung aus.

Wird jedoch der Haken 8 in seine offene Position gebracht, so fluchtet seine Stirnfläche nicht mehr mit dem Vorsprung 16 des Widerlagers; das Zwischenstück 6 kann wieder in vertikaler Richtung bewegt werden.

Die Figuren 6 und 7 zeigen schließlich, wie die einstückige Buchse 9 nicht nur zur Aufnahme von zylindrischen, sondern auch zur Aufnahme von anders geformten Schäften 11 des Werkzeugs 10 innerhalb des Zwischenstücks 6 angeordnet sein kann. Weiterhin zeigt Fig. 6, daß die Buchse aus mehreren Segmenten 17 bestehen kann, die durch federelastische Zwischenstücke 18 miteinander verbunden sind. Da die ganze Buchse aus federelastischem Material hergestellt ist, kann sie auch in dieser Form einstückig hergestellt sein. Statt dieser in Fig. 6 winkelförmig dargestellten federelastischen Elemente 18 können auch in Achsrichtung verlaufende Nuten vorgesehen sein oder vollständig durch das "Fleisch" der Buchse 6 verlaufende Einschnitte, die dann allerdings nicht durch die volle axiale Länge der Buchse gehen, so daß vorzugsweise am einem Ende der Buchse noch ein geschlossener Ring vorhanden ist, so daß auch eine so geformte Buchse noch einstückig hergestellt werden kann.

## Patentansprüche

1. Vorrichtung zur Befestigung eines an einem Ende eines einen zylindrischen Schaft (6.1) aufweisenden Zwischenstücks (6) angeordneten Gegenstandes (10) an einem Kupplungsteil (2) einer Kupplung, deren anderes Kupplungsteil (1) an einer Werkzeugmaschine, insbesondere einer Senkerosionsmaschine, verankert ist, wobei das eine Kupplungsteil (2) eine Aufnahmehülse (2.3) mit Bohrung (3) zur Aufnahme des Schaftes (6.1) des Zwischenstückes (6) und das Zwischenstück (6) ein von der Außenseite des zylindrischen Schaftes (6.1) abstehendes Befestigungsteil (7) aufweist, das in Eingriff mit einer an der Stirnseite der Aufnahmehülse (2.3) des Kupplungsteils (2) angeordneten Verriegelung (8) bringbar ist, wobei die Stirnseite (2.7) der Aufnahmehülse (2.3) als Anschlag für ein Einschieben des Zwischenstückes ausgebildet ist,
dadurch gekennzeichnet,
- daß der Schaft (6.1) des Zwischenstückes (6) hohlzylindrisch und das von dem Schaft (6.1) abstehende Befestigungsteil (7) einstückig mit dem Zwischenstück (6) ausgebildet ist,
- daß in dem Schaft (6.1) des Zwischenstückes (6) an dem von dem anderen Kupplungsteil (1) fortweisenden Ende eine konische Bohrung ausgebildet ist,
- daß eine einstückige Buchse (9) vorgesehen ist, deren Mantelfläche zumindest teilweise konische Kontur aufweist und deren Flächen der Innenwandung (9.2) einen Innenraum ausbilden, in den das einzuspannende Ende eines zylinderförmigen Schaftes (11) des Gegenstandes (10) einsetzbar ist, und
- daß die einstückige Buchse (9) zusammen mit dem von ihr aufgenommenen Schaft (11) des Gegenstandes (10) in die konische Bohrung in dem Schaft (6.1) des Zwischenstückes (6) einpreßbar ist,
- daß an der Stirnfläche der Wandung der Aufnahmehülse (2.3) des Kupplungsteils (2) eine Nut (2.6) zur Aufnahme des jeweiligen Befestigungsteils (7) ausgebildet ist, und
- daß die Nut (2.6) gegenüber der Stirnseite (2.7) so versetzt angeordnet ist, daß das Befestigungsteil (7) beim Einschieben des Zwischenstückes (6) zuerst mit den Seitenwänden der Nut (2.6) in Berührung kommt und dann erst bei weiterem Einschieben unter elastischer Verformung mit der Stirnfläche (2.7) in Kontakt kommt.

2. Vorrichtung nach Anspruch 1, dadurch gekennzeichnet,
daß der Gegenstand (10) ein Werkzeug, insbesondere eine Funkenerosions-Senkelektrode ist.

3. Vorrichtung nach Anspruch 1 oder 2, dadurch gekennzeichnet,
daß das Befestigungsteil (7) des Zwischenstückes (6) an seiner dem Kupplungsteil (2) zugewandten Seite eine gekrümmte Oberfläche aufweist.

4. Vorrichtung nach einem der Ansprüche 1 bis 3, dadurch gekennzeichnet,
daß das Befestigungsteil (7) des Zwischenstückes (6) einen eckigen Querschnitt aufweist.

5. Vorrichtung nach Anspruch 3 oder 4, dadurch gekennzeichnet,
daß die Nut (2.6) zur Aufnahme des jeweiligen Befestigungsteils (7) in Linienberührung oder schmaler Flächenberührung ausgebildet ist.

6. Vorrichtung nach Anspruch 1, dadurch gekennzeichnet,
daß die Verriegelung (8) dreh- bzw. schwenkbar ist und das Befestigungsteil (7) erst nach Aufnahme in der Nut (2.6) mit der Verriegelung (8) in Eingriff bringbar ist.

7. Vorrichtung nach Anspruch 6, dadurch gekennzeichnet,
daß die Verriegelung (8) ein Haken ist.

8. Vorrichtung nach Anspruch 7, dadurch gekennzeichnet,
daß die Verriegelung (8) in einem Widerlager (15) gehalten ist, das an der Aufnahmehülse (2.3) befestigt ist.

9. Vorrichtung nach einem der Ansprüche 1 bis 8, dadurch gekennzeichnet,
daß die einstückige Buchse (9) in ihrem Bodenteil eine zentrale Kreisöffnung (9.1) aufweist, deren Durchmesser kleiner ist als der Durchmesser des durch die Innenflächen der Wandungen (9.2) begrenzten kleinsten Zylinders, dessen Achse koaxial mit der Achse der einstückigen Buchse (9) fluchtet.

10. Vorrichtung nach einem der Ansprüche 1 bis 9, dadurch gekennzeichnet,
daß der Innenraum der einstückigen Buchse (9) zylindrische Form aufweist.

11. Vorrichtung nach einem der Ansprüche 1 bis 10, dadurch gekennzeichnet,
daß der Innenraum der einstückigen Buchse (9) eine von der zylindrischen Form abweichende Gestalt aufweist.

12. Vorrichtung nach einem der Ansprüche 1 bis 11, dadurch gekennzeichnet,
daß die Mantelfläche der einstückigen Buchse (9) radial vorspringende Rippen aufweist.

13. Vorrichtung nach einem der Ansprüche 1 oder 9 bis 12, dadurch gekennzeichnet,
daß die Innenflächen der Wandung (9.2) Rippen aufweisen.

14. Vorrichtung nach einem der Ansprüche 1 bis 13, dadurch gekennzeichnet,
daß die einstückige Buchse (9) aus elastisch verformbarem Material ist.

15. Vorrichtung nach Anspruch 14, dadurch gekennzeichnet,
daß die einstückige Buchse (9) aus Aluminium ist.

16. Vorrichtung nach einem der Ansprüche 1 oder 9 bis 15, dadurch gekennzeichnet,
daß die einstückige Buchse (9) mehrere konische Segmente (17) aufweist, die durch federelastische Teile (18) miteinander verbunden sind.

17. Vorrichtung nach einem der Ansprüche 1 oder 9 bis 16, dadurch gekennzeichnet,
daß die einstückige Buchse (9) aus einem Ring mit parallel zu seiner Mittelachse verlaufenden Einschnitten oder Schlitzen besteht.

18. Vorrichtung nach einem der Ansprüche 1 bis 17, dadurch gekennzeichnet,
daß der Querschnitt der Buchse (9) eine von einer Kreiskontur abweichende Form hat, insbesondere eine Vieleckform bzw. die Form eines Polygonzuges.

## Claims

1. Apparatus for securing an object (10), which is arranged at one end of an intermediate piece (6) having a cylindrical shaft (6.1), to a coupling part (2) of a coupling whereof the other coupling part (1) is anchored to a machine tool, in particular an erosion machine, the one coupling part (2) having a receiving sleeve (2.3) with a bore (3) for receiving the shaft (6.1) of the intermediate piece (6) and the intermediate piece (6) having a securing part (7) which projects from the outside of the cylindrical shaft (6.1) and which can be brought into engagement with a locking means (8) which is arranged on the end side of the receiving sleeve (2.3) of the coupling part (2), the end side (2.7) of the receiving sleeve (2.3) being constructed as a stop for inserting the intermediate piece,
characterized
- in that the shaft (6.1) of the intermediate piece (6) is constructed to be hollow-cylindrical and the securing part (7) which projects from the shaft (6.1) is constructed in one piece with the intermediate piece (6),
- in that a conical bore is made in the shaft (6.1) of the intermediate piece (6) at the end which faces away from the other coupling part (1),
- in that there is provided a one-piece bush (9) whereof the outer surface has an at least partially conical contour and whereof the surfaces of the inner wall (9.2) form an interior into which the end to be clamped of a cylindrical shaft (11) of the object (10) can be inserted, and
- in that the one-piece bush (9), together with the shaft (11) of the object (10) received thereby, can be pressed into the conical bore in the shaft (6.1) of the intermediate piece (6),
- in that a groove (2.6) for receiving the respective securing part (7) is made in the end face of the wall of the receiving sleeve (2.3) of the coupling part (2), and
- in that the groove (2.6) is offset with respect to the end side (2.7) such that the securing part (7), on inserting the intermediate piece (6), first comes into contact with the side walls of the groove (2.6) and then, only after further insertion and with resilient deformation, comes into contact with the end face (2.7).

2. Apparatus according to Claim 1, characterized in that the object (10) is a tool, in particular a spark erosion electrode.

3. Apparatus according to Claim 1 or 2, characterized in that the securing part (7) of the intermediate piece (6) has a curved surface on its end facing the coupling part (2).

4. Apparatus according to one of Claims 1 to 3, characterized in that the securing part (7) of the intermediate piece (6) has a square cross-section.

5. Apparatus according to Claim 3 or 4, characterized in that the groove (2.6) is constructed for receiving the respective securing part (7) in linear contact or narrow surface contact.

6. Apparatus according to Claim 1, characterized in that the locking means (8) can be turned or swivelled and the securing part (7) can be brought into engagement with the locking means (8) only once the securing part (7) has been received in the groove (2.6).

7. Apparatus according to Claim 6, characterized in that the locking means (8) is a hook.

8. Apparatus according to Claim 7, characterized in that the locking means (8) is held in a counter-bearing (15) which is secured to the receiving sleeve (2.3).

9. Apparatus according to one of Claims 1 to 8, characterized in that the one-piece bush (9) has in its floor part a central circular opening (9.1) whereof the diameter is smaller than the diameter of the smallest cylinder which is delimited by the inner surfaces of the walls (9.2) and whereof the axis runs in coaxial alignment with the axis of the one-piece bush (9).

10. Apparatus according to one of Claims 1 to 9, characterized in that the interior of the one-piece bush (9) has a cylindrical shape.

11. Apparatus according to one of Claims 1 to 10, characterized in that the interior of the one-piece bush (9) has a form which is different from the cylindrical shape.

12. Apparatus according to one of Claims 1 to 11, characterized in that the outer surface of the one-piece bush (9) has radially projecting ribs.

13. Apparatus according to one of Claims 1 or 9 to 12, characterized in that the inner surfaces of the wall (9.2) have ribs.

14. Apparatus according to one of Claims 1 to 13, characterized in that the one-piece bush (9) is of a resiliently deformable material.

15. Apparatus according to Claim 14, characterized in that the one-piece bush (9) is of aluminium.

16. Apparatus according to one of Claims 1 or 9 to 15, characterized in that the one-piece bush (9) has a plurality of conical segments (17) which are connected to one another by resilient parts (18).

17. Apparatus according to one of Claims 1 or 9 to 16, characterized in that the one-piece bush (9) comprises a ring having incisions or slits which run parallel to the centre axis of the ring.

18. Apparatus according to one of Claims 1 to 17, characterized in that the cross-section of the bush (9) has a shape which is different from a circular contour, in particular a many-sided shape or the shape of a polygonal figure.

## Revendications

1. Dispositif de fixation d'un objet (10) monté à une extrémité d'une pièce intermédiaire (6) comportant un arbre cylindrique (6.1), à un élément de couplage (2) d'un accouplement, dont l'autre élément de couplage (1) est fixé à une machine-outil, en particulier à une machine d'électro-érosion en plongée, dans lequel l'élément de couplage (2) comporte un manchon de réception (2.3) muni d'un alésage (3) pour la réception de la tige (6.1) de la pièce intermédiaire (6) et la pièce intermédiaire (6) comprend, un organe de fixation (7), en saillie par rapport à la face extérieure de la tige cylindrique (6.1), et qui est susceptible d'être engagé sur un organe de verrouillage (8) disposé sur la face frontale du manchon de réception (2.3) de l'élément de couplage (2), la face frontale (2.7) du manchon de réception (2.3) formant butée pour l'insertion de la pièce intermédiaire, caractérisé en ce que:
- la tige (6.1) de la pièce intermédiaire (6) présente une forme cylindrique creuse et l'organe de fixation (7) en saillie par rapport à la tige (6.1) est réalisé monobloc avec la pièce intermédiaire (6),
- un alésage conique est ménagé dans l'extrémité de la tige (6.1) de la pièce intermédiaire (6) qui est la plus éloignée de l'autre élément de couplage (1),
- il est prévu un mandrin ou une douille monobloc (9) dont la surface d'enveloppe présente au moins partiellement un contour conique et dont la surface de la paroi intérieure (9.2) ménage une cavité intérieure dans laquelle est susceptible d'être insérée l'extrémité à serrer d'une tige de forme cylindrique (11) de l'objet (10), et
- le mandrin monobloc (9) est susceptible d'être monté à force avec l'arbre (11) de l'objet (10) inséré dans ce mandrin, dans l'alésage conique de la tige (6.1) de la pièce intermédiaire (6),
- une gorge ou rainure (2.6) destinée à recevoir l'organe de fixation correspondant est formée sur la surface frontale de la paroi du manchon de réception (2.3) de l'élément de couplage (2),
- la gorge (2.6) est décalée par rapport à la face frontale (2.7) de telle façon pour que, lors de l'insertion de la pièce intermédiaire (6), l'organe de fixation (7) vienne d'abord en contact avec les parois latérales de la gorge (2.6), et vienne ensuite en contact avec la surface frontale (2.7) par déformation élastique au cours de la poursuite de l'insertion.

2. Dispositif selon la revendication 1, caractérisé en ce que l'objet (10) est un outil, en particulier un outil de fonçage ou de plongée d'une machine d'électro-érosion.

3. Dispositif selon la revendication 1 ou 2, caractérisé en ce que l'organe de fixation (7) de la pièce intermédiaire (6) comporte, sur sa face tournée vers l'élément de couplage (2), une surface incurvée.

4. Dispositif selon l'une des revendications 1 à 3, caractérisé en ce que l'organe de fixation (7) de la pièce intermédiaire (6) présente une section transversale polygonale.

5. Dispositif selon la revendication 3 ou 4, caractérisé en ce que la gorge (2.6) destinée à recevoir l'organe de fixation (7) correspondant ménage un contact linéaire ou selon une surface réduite.

6. Dispositif selon la revendication 1, caractérisé en ce que l'organe de verrouillage (8) est susceptible de tourner ou de pivoter et l'organe de fixation (7) n'est susceptible d'être engagé sur l'organe de verrouillage (8) qu'après réception dans la gorge (2.6).

7. Dispositif selon la revendication 6, caractérisé en ce que l'organe de verrouillage (8) est un crochet.

8. Dispositif selon la revendication 7, caractérisé en ce que l'organe de verrouillage (8) est maintenu dans un contre-appui (15) qui est fixé au mandrin de réception (2.3).

9. Dispositif selon l'une des revendications 1 à 8, caractérisé en ce que le mandrin monobloc (9) présente dans sa partie de fond une ouverture centrale circulaire (9.1) dont le diamètre est inférieur au diamètre du plus petit cylindre délimité par la surface intérieure de la paroi (9.2), cylindre dont l'axe est coaxial à l'axe du mandrin monobloc (9).

10. Dispositif selon l'une des revendications 1 à 9, caractérisé en ce que la cavité intérieure du mandrin monobloc (9) présente une forme cylindrique.

11. Dispositif selon l'une des revendications 1 à 10, caractérisé en ce que la cavité intérieure du mandrin monobloc (9) présente une forme différant de la forme cylindrique.

12. Dispositif selon l'une des revendications 1 à 11, caractérisé en ce que la surface d'enveloppe du mandrin monobloc (9) présente des nervures en saillie radiale.

13. Dispositif selon l'une des revendications 1 ou 9 à 12, caractérisé en ce que la surface intérieure de la paroi (9.2) comporte des nervures.

14. Dispositif selon l'une des revendications 1 à 13, caractérisé en ce que le mandrin monobloc (9) est réalisé en un matériau élastiquement déformable.

15. Dispositif selon la revendication 14, caractérisé en ce que le mandrin monobloc (9) est réalisé en aluminium.

16. Dispositif selon l'une des revendications 1 ou 9 à 15, caractérisé en ce que le mandrin monobloc (9) comporte plusieurs segments coniques (17) qui sont reliés entre eux par des parties élastiques (18).

17. Dispositif selon l'une des revendications 1 ou 9 à 16, caractérisé en ce que le mandrin monobloc (9)consiste en un anneau muni d'encoches ou fentes s'étendant parallèlement à son axe médian.

18. Dispositif selon l'une des revendications 1 à 17, caractérisé en ce que la section transversale du mandrin monobloc (9) présente une forme différant d'un contour circulaire, notamment une forme à plusieurs angles ou la forme d'un tracé polygonal.
